# EUROPEAN PATENT SPECIFICATION

(11) **EP 2 007 151 B1**
(45) Date of publication and mention of the grant of the patent: **20.05.2009**
(21) Application number: 07290759.5
(22) Date of filing: 19.06.2007
(51) Int. Cl.: H04W 99/00

(54) **Method of selecting between multiple operation modes of providing a broadcast or multicast services**
Auswahlverfahren zwischen mehreren Betriebsmodi für die Bereitstellung eines Rundfunk- oder Multicast-Dienstes
Procédé de sélection entre plusieurs procédés de fonctionnement de fourniture de services de radiodiffusion ou de multidiffusion

(43) Date of publication of application: 24.12.2008
(73) Proprietor: Alcatel Lucent, 75008 Paris (FR)
(72) Inventor: Gruber, Markus, 70825 Korntal-Münchingen (DE); Zeller, Dietrich, 71067 Sindelingen (DE); Kaminski, Stephen, 73054 Eislingen (DE)
(74) Representative: Schmidt, Werner Karl

(56) References cited:
- EP-A- 1 729 535
- TECHNICAL SPECIFICATION GROUP RADIO ACCESS NETWORK: "3GPP TS 36.300 V1.0.0: Evolved Universal Terrestrial Radio Access (E-UTRA) and Evolved Universal Terrestrial Radio Access Network (E-UTRAN); Overall Description; Stage 2 (Release 8)" 3RD GENERATION PARTNERSHIP PROJECT (3GPP); TECHNICAL SPECIFICATION (TS), XX, XX, vol. 36.300, no. 100, March 2007 (2007-03), pages 1-42, XP002447408
- MOTOROLA: "Additional results on E-MBMS transmissions" 3GPP R1-071433, [Online] 26 March 2007 (2007-03-26), pages 1-9, XP002459443 Retrieved from the Internet: URL:www.3gpp.org> [retrieved on 2007-11-21]
- ERICSSON: "Spectral efficiency comparison od possible MBMS transmission schemes: additional results" 3GPP R1-071049, [Online] 12 February 2007 (2007-02-12), pages 1-4, XP002459444 Retrieved from the Internet: URL:www.3gpp.org> [retrieved on 2007-11-27]
- NOKIA: "Efficiency comparison of MBMS transmission modes" 3GPP R1-070984, [Online] 12 February 2007 (2007-02-12), pages 1-3, XP002459445 Retrieved from the Internet: URL:www.3gpp.org> [retrieved on 2007-11-27]

## Description

### Technical field

The invention relates to a method of selecting between at least a first and a second operation mode of providing a broadcast or multicast service to user equipments, a method of transmitting an operation expense value to a control entity, a control entity, a base station and a computer program product.

### Background and related art

A challenging task in mobile telecommunication is to provide multimedia services like video services to a wireless user in an efficient way. Efficiency refers here especially to an efficient use of the scarce and expensive radio resource like frequency bands allocated to a network, such that as many users and different services as possible can be served in parallel within the radio frequency band. While existing second generation wireless networks support voice services in an efficient way, third generation wireless systems and packet-based wireless network's goal is to to provide optimal service for data communication and distribution in the most efficient way. One example is mobile TV, which is a service which is provided to subscribers via telecommunication networks. Mobile TV involves providing TV services to mobile phones or in general user equipments (UEs). It combines the services of a mobile phone with television content and represents a logical step both for consumers and operators and content providers.

Mobile TV can be provided for example using new generation 3G (WCDMA/HSPA) networks. Such networks provide enough capacities in order to scale-up mobile TV services for the mass market.

By using, depending on the service, unicast or broadcast/multicast transmission techniques, network capacity and investments can be optimized. Broadcast/multicast techniques are applicable when (multi-media) data has to be provided from one source to a large number of receivers in parallel (e.g. popular TV programs). Unicast techniques are applicable when data has been exchanged between different communicating entities or data has to be distributed to one or few receivers (e.g. on-demand multi-media content).

However, with the provision of media services to customers, the problem has arisen that the limited bandwidth of data transmission has to be distributed effectively among a multitude of wireless users. Multimedia broadcast/multicast service (MBMS) is one of the evolving service concepts within the third generation networks. MBMS is a user service, which is a combination of both a broadcast service and a multicast service. Third generation partnership (3GPP) is working on establishing standards for multimedia broadcasts/multicast services.

Regarding such kind of MBMS service concepts, 3GPP TS 36.300 (third generation partnership project; technical specification group radio access network; evolved universal terrestrial radio access (E-UTRA) and evolved universal terrestrial radio access network (E-UTRAN); overall description; stage 2 (release 8)) suggests two transmission modes for MBMS data, namely point-to-multipoint single-cell (PTM-SC) transmission with full feedback and adaptive modulation and coding applied, but with no coordination with neighboring cells. The second described transmission mode is point-to-multipoint multi-cell transmission (PTM-MC) in the form of an MBSFN (multicast broadcast single frequency network) where participating cells have synchronized MBMS content and thereby considerably reduced interference.

However, there is the technical problem to find a suitable criterion to switch between these two transmission modes. Thereby, information about a density of users interested in an MBMS service is vital for a decision when to switch to PTM-SC or PTM-MC.

In PTM-SC mode the MBMS data is sent out individually in each single cell. This means, that even in the case that cells transmitting the same service are immediate neighbors, they are not coordinating their transmission and therefore their transmissions might interfere with each other. On the other hand in MBSFN the transmission of MBMS data is synchronized between the different cells such that the signals received by a UE can be soft-combined over multiple cells instead of interfering with each other. This allows that the data can be transmitted more efficiently using less radio resources as for example the frequency in a cell. However, this transmission mode requires that the transmission is performed in a cluster of cells. Therefore, this mode is only efficient if in a sufficiently large part of the transmitting cells there are interested users for a specific MBMS service.

Furthermore, it was shown that switching between these two modes depends on the average user density for a given cluster with typical break points between 0.5 and 4 users per cell. This can for example be found in the 3GPP Tdocs R1-071433 'additional results on E-MBMS transmission', Motorola, R1-071049, 'spectral efficiency comparison of possible MBMS transmission schemes: additional results', Ericsson and R1-070984, 'efficiency comparison of MBMS transmission modes', Nokia.

Therefore one way to find a suitable criterion to switch between PTM-SC and PTM-MC, is to determine the average number of users per cell for a given MBMS service. Such a determination of the average number of users per cell could for example be performed by counting or polling.

Counting thereby identifies how many users take part in a specific MBMS service. The main advantage of this procedure is the fact, that the average user density can readily be determined. A major disadvantage is the amount of radio resources that needs to be spent. User equipments (UEs) in RRC_IDLE may receive an MBMS service without being time aligned, so that they would have to signal their participation via the RACH (random access channel). In case of a large number of participants this may cause congestion (compare 3GPP Tdocs R2-070742, 'counting procedure for LTE MBMS', CATT and R2-062271, 'layer 1 signaling base user detection for LTE MBMS', IP wireless).

Polling allows to determine whether there is one or more user equipments present in a cell that is interested in an MBMS service. Thus in contrast to counting, it does not matter how many UEs are interested or participating, but only if they are interested or participating. Generally, polling is regarded to be simpler than counting.

In a given cell cluster the average user density, which is determined either directly by counting or implicitly by polling, can also be the criterion for a respective control entity to decide which of the two techniques is more efficient in terms of used ratio resources. Thereby, the control entity is for example the MBMS control entity (MCE). The MCE is responsible for coordination of the base stations taking part in PTM-MC transmission and to select the transmission mode (PTM-SC transmission or PTM-MC transmission) to be applied in the different base stations. Since for the MCE, the quantity of used radio resources is the main focus in the first place, it would be more suitable for a base station to send an estimate of the achievable transmission efficiency e.g. in terms of used resources per standardized data quantity for a given MBMS service in PTM-SC transmission mode and PTM-MC transmission mode instead of polling or counting values to the MCE. This would allow the MCE to have more accurate estimates for the efficiency of service transmission in PTM-SC and PTM-MC mode and to select the most efficient transmission mode for a service.

Document EP 1 729 535 discloses a method for recounting the number of UEs in a MBMS service.

### Summary of the invention

The present invention provides the method of selecting by a control entity between at least a first and a second operation mode of providing a broadcast or multicast service to user equipments (UEs) in a wireless telecommunication network, the method comprising the steps of transmitting a request signal to a multitude of base stations, the base stations being adapted for providing the service to the user equipments, receiving operating expense values in response to the transmitted request signal from the base stations, the operating expense values describing the amount of radio resources per data volume required for providing the service from the base stations to the user equipments and selecting one of the at least operation modes of providing the service by analyzing the received operating expense values.

An operation mode is in general a transmission technique or a set of transmission techniques that are categorized into said operation mode because of common features. Correspondingly, a change of the operation mode can also refer to a change between two transmission techniques even if they are categorized to be in the same operation mode.

Therewith, a base station (in 3GPP LTE: eNodeB) supplies a control entity with information on the estimated radio efficiency, e.g. the amount of radio resources per data volume required for providing the service from the eNodeB to the user equipments, or more exactly the number of used resource blocks per data quantity for a given MBMS service. Since saving radio resources is the primary reason for switching between transmission modes, it is advantageous to directly use a radio resource efficiency value (used spectrum per data quantity) instead of using another value like polling or counting values that only implicitly refer to the same information.

Using directly a radio resource efficiency value has further the advantage, that even though radio resource efficiencies might differ between different eNodeBs, either because of differences in the implementation of the eNodeBs or because of different radio environments, the control entity always obtains information about required radio resources which is the key criterion for the control entity to decide which transmission technique to use. In case the radio resource efficiency differs between different eNodeBs, transmitting polling or counting information to a control entity may lead to wrong decisions of the control entity which transmission technique to use, because the control entity has no information about the different radio resource efficiencies at the different eNodeBs. Therewith, by directly using radio resource efficiency values transmitted from the eNodeBs to the control entities has the advantage of obtaining a more precise basis for the decision of the control entity which transmission technique to use.

It has to be mentioned, that transmitting the request signal to the multitude of base stations (eNodeBs) might be only necessary when initially providing a given service to user equipments via the eNodeBs. For example, if the eNodeBs support automatic and periodic transmission of used radio resources to the control entity, the control entity does have to send said request signal only once. After that, the control entity periodically receives radio resource efficiency values from the base stations.

In accordance with an embodiment of the invention, the service is a multimedia broadcast/multicast service (MBMS). This allows a highly efficient distribution of multimedia data streams to user equipments in the digital wireless communication network. MBMS offers a capacity for data transmission which allows for multicast distribution instead of only a point-to-point link to user equipments in the digital wireless communication network. This leads to a more efficient system usage enabling streaming and download services for a multitude of user equipments served by a respective eNodeB.

The operation modes or transmission techniques of providing a broadcast or multicast service to user equipments may be categorized by taking into account at least the feature "synchronicity over multiple cells" and the feature "existence of a feedback mechanism". The broadcast and multicast service by nature in MBMS transmits data point-to-multipoint, but does not preclude point-to-point transmission for low user density cases.

In accordance with an embodiment of the invention, the first operation mode is characterized in that the providing of the service from the base stations to the user equipments is scheduled autonomously by the base stations. The second operation mode is characterized in that the providing of the service from the base stations to the user equipments is scheduled by the control entity. In other words, in the first operation mode the base station is allowed to set and adjust for example transmission frequencies, timeslots and the modulation and coding scheme (MCS), whereas in the second operation mode transmission frequencies, timeslots and MCS are specified by the control entity. For example, the first operation mode is a point-to-multipoint single-cell transmission mode (PTM-SC) and the second mode is a point-to-multipoint multi-cell transmission mode (PTM-MC).

It has to be noted that in case the control entity configures the base stations to use the first operation mode, even though the base stations decide on the radio resources and configuration they apply for transmitting the service in an autonomous way, this case does not preclude that the control entity provides base stations with information, e.g. frequencies to be used only with restricted power, for the control of interference between neighbouring base stations. Conversely, in addition to the expense value reports the base stations can also add supplementary information contained in these reports, like preferred frequencies, interference and load status, which the control entity can take into account when generating the interference control information.

In accordance with an embodiment of the invention, in case providing of the broadcast or multicast service to the user equipments is performed in the second operation mode, the operating expense values are determined by the base stations assuming that the first operation mode is used for providing of the broadcast or multicast service to the user equipments. In general for the case where more than two operation modes are available, the operating expense values are determined by the base stations assuming that any other than the second operation mode is used for providing of the broadcast or multicast service to the user equipments.

In accordance with an embodiment of the invention, the first and/or the second operation mode is characterized in that user equipment feedback messages are received by a base station in response to transmitting data of the service to the user equipments or that data of the service is transmitted to the user equipments and that at least one user equipment response message is received by a base station in response to transmitting a return information request to the user equipments.

Automatically receiving of user equipment feedback messages by the base station in response to transmitting just the data of the service to the user equipments allows to directly determine the transmission quality and therewith to control the transmission power and the MCS of the base station. However, controlling of for example the MCS of the base station is only possible, if the base station is currently providing the service in a mode which allows for an autonomous adjustment of these parameters. The user equipment feedback messages automatically transmitted from the user equipments to the base station may be comprised in a feedback channel which can be used to adjust said transmission power and the MCS. Thereby, receiving only '0' on the feedback channel is also regarded as a UE feedback message, even though such kind of '0' might be the normal state of the channel bits which could for example be the case if all data are properly received by the user equipments. In other words, such receiving of '0' on the feedback channel does not necessarily require an active transmission of '0' in terms of an acknowledgement (ACK) signal from the user equipments to the base stations. Nevertheless, if a user equipment has not received properly data transmitted to the user equipment, the user equipment may send a '1' in terms of a non-acknowledgement (NACK) to the base station.

It should be mentioned, that in the following it is assumed, that PTM-MC in the form of MBSFN does not employ a feedback mechanism according to 3GPP TS 36.300 (third generation partnership project; technical specification group radio access network; evolved universal terrestrial radio access (E-UTRA) and evolved universal terrestrial radio access network (E-UTRAN); overall description; stage 2 (release 8)), whereas PTM-SC employs a feedback mechanism.

Since in PTM-SC transmission mode, user equipment feedback messages are automatically received by the base station in response to transmitting just the data of the service to the user equipments, the determined amount of radio resources used for the transmission contains more information if transmitted to the control entity then polling or counting would provide if just the polling or counting information would be transmitted to the control entity. This is the case because the radio resource consumption is not only a function of the number of users. For instance, a group of 10 user equipments right next to an eNodeB will consume much less radio resources than the same group at the cell edge, while for polling or counting these two situations would be equivalent.

The same argumentation holds for the PTM-MC transmission, or in general transmission modes where in order to receive information about the number of users an extra information request message has to be transmitted together with the data of the service to the user equipments, wherein in response to transmitting the return information request to the user equipments a respective user equipment response message is received by the base station. In case of for example PTM-MC in the form of MBSFN, due to the non existence of a feedback mechanism, the base station (eNodeB) does not know if there actually are any users or how many users are in the cell unless polling or counting is carried out. If polling or counting yields that at least one or more users are in the cells, the base station can now send a non-negative value reflecting the estimated radio resources used for the MBMS service.

In detail, the user equipment response message can be used in order to estimate an updated operating expense value reflecting the radio resource necessary for continued transmission of the MBMS service to the user equipment - either using the present operation mode or an updated, for example PTM-SC transmission mode.

Of course, the actual resource consumption of an PTM-MC transmission is well known by the control entity because for PTM-MC transmission it configures the transmission for all base stations, i.e. it instructs all base stations which frequencies and which time slots and which modulation and coding the base stations shall apply. However, the control entity is not able to know what the different base stations would do in an PTM-SC-transmission, because in such a transmission mode the base stations can decide by their own, which frequencies and time slots and which MCS to apply. Since this configuration determines the operation expense of the transmission, a straightforward way of the control entity to decide on the most suitable transmission mode is to compare the operation expense for PTM-MC transmission (which it knows by itself) and the estimated PTM-SC transmission operation expense reported from the base stations.

If in a cell a given MBMS service is not transmitted yet, the base station may communicate to the control entity that there are no radio resources spent on the MBMS service and the control entity further receives from the base station an estimate of necessary radio resources required by the base station to provide said service to the user equipments potentially interested in the MBMS service in the cell.

In another aspect, the invention relates to a method of transmitting an operation expense value to a control entity, the operating expense value describing the amount of radio resources per data volume required for providing a broadcast or a multicast service from a base station to user equipments, the providing of the service being performable using at least a first and a second operation mode. The method comprises receiving a request signal from the control entity and determining the operating expense value. Thereby, in case user equipment feedback messages are received in response to transmitting data of the service to the user equipments, the determination of the operating expense value is performed by analyzing the user equipment feedback messages received in response to transmitting data of the service to the user equipments. In case data of the service is transmitted to the user equipments and at least one user equipment response message received in response to transmitting a return information request to the user equipments, the determination of the operating expense value is performed by analyzing the at least one user equipment response message received in response to transmitting the return information request to the user equipments. Thereby, the determination of the operating expense value is performed by an estimate of the resource consumption one would have when applying an operation mode which would allow autonomous scheduling of the given service by the base station itself. This estimate might for example be based on some knowledge of the existence or number of interested numbers obtained by polling our counting.

In case no transmission of the service is performed, the determination of the operating expense value is performed by transmitting a return information request to the user equipments and analyzing at least one user equipment response message received in response to transmitting the return information request to the user equipments. Thereby, the determination of the operating expense value is also performed by an estimate of the resource consumption one would have when applying an operation mode which would allow autonomous scheduling of the given service by the base station itself.

In the last step of the method, the determined operating expense value is transmitted to the control entity.

Again, as already discussed above, receiving a request signal from the control entity does not mean that the operating expense value is only determined and transmitted to the control entity if such a request signal is received from the control entity. It is also possible, that the request signal is only received once from the control entity and that thereafter, the determination of the operating expense value and the transmitting of the determined operating expense value is performed by the base station periodically and the reporting is done if the expense values have changed (or according to any other predefined scheme). This has the advantage, that the signaling between the base station and the control entity is reduced.

The advantage of the method of transmitting the operating expense value to the control entity is, that the control entity is enabled to determine much more accurately which operation mode is more efficient in terms of used radio resources. This allows the control entity to accurately estimate the efficiency of service transmission for example in PTM-SC and PTM-MC mode and therewith to select the most efficient transmission mode for an MBMS service.

In accordance with an embodiment of the invention, in case user equipment feedback messages are received in response to transmitting data of the service to the user equipments, the user equipment feedback messages comprise hybrid automatic repeat requests (HARQs) and/or channel quality indicators (CQIs). In case data of the service is transmitted to the user equipments and at least one user equipment response message received in response to transmitting a return information request to the user equipments, the return information request transmitted to the user equipments is a counting or polling request and the at least one response message received in response to transmitting said counting or polling request is a counting or polling response. In case no transmission of the service is performed, the return information request transmitted to the user equipments is a counting or polling request and the at least one response message received in response to transmitting said counting or polling request is a counting or polling response.

For example, in PTM-SC, the MBMS data is sent out to multiple users that send NACKs if they were not able to decode the transmission block properly. Depending on the HARQ feedback, the base station would dynamically adapt for example the modulation and coding scheme (MCS). The base station could also dynamically adjust the transmission power. Such a dynamic adaption of the MCS is also known as adaptive modulation and coding (AMC). Since based on the HARQ feedback as well as for example on the CQI feedback the base station calculates and therewith knows the amount of resources which are used for a given MBMS service, the operating expense value can easily be measured in used resource blocks per data quantity and service in both downlink and uplink direction as a measure of the efficiency of the transmission.

This number of used resources can be communicated to the control entity. Such control entity may for example be an MBMS control entity (MCE). The control entity in turn collects these values from all cells of a given cluster, calculates the average and compares this value to the resources necessary for an MBSFN. Therewith, a major advantage of this approach is that the number of used radio resources is a much more straightforward parameter for determining the switching point between different transmission modes. In contrast, a user density as parameter for determining the switching point between various operation modes would only be a parameter which would indirectly try to refer to the same quantity, the number of used resources. Therewith, a highly accurate determination of the switching point for switching between various operation modes is available.

In summary, as long as there are interested users in a cell, their feedback (for example HARQ, CQI) yields valuable information on the most suitable MCS. If for some reason there are no interested users anymore, there will be no HARQ feedback at all. If this situation persists for a defined data quantity the base station stops its transmission. This allows the base station to detect that there are no users anymore much earlier than it would be possible with periodic polling or counting.

In accordance with an embodiment of the invention, the method further comprises transmitting the operating expense value to at least one further control entity. This is for example necessary, if more than one control entity is responsible for controlling base stations. Even though, each base station has one associated control entity, the situation may occur that two base stations with neighboring cells have to transmit the same MBMS service to user equipments, wherein however these base stations are associated to different control entities. If in this example, two control entities know about the used radio resource efficiency values of both two associated base stations, this combined information can be used by the two control entities to form a new cell cluster. This new cell cluster exhibits thereby cells served by both base stations. Providing of a respective MBMS service to user equipments in said cells can therewith performed in a coordinated manner in the same operation mode. This is especially important for PTM-MC (in the present example the second operation mode) where participating cells have synchronized MBMS content and therewith considerably reduced interference.

Therewith, by transmitting the operation expense value to at least one further control entity, a dynamic build-up of clusters of cells served by multiple base stations can be obtained over physical boundaries specified by control entities being responsible for different base stations.

In another aspect, the invention relates to a control entity for a wireless telecommunication network, the control entity being adapted for selecting between at least a first and a second operation mode of providing a broadcast or multicast service to user equipments, the control entity comprising means for transmitting a request signal to a multitude of base stations, the base stations being adapted for providing the service to the user equipments, means for receiving operating expense values in response to the transmitted request signal from the base stations, the operating expense values describing the amount of radio resources per data volume required for providing the service from the base stations to the user equipments and means for selecting one of the at least two operation modes of providing the service by analyzing the received operating expense values.

Thereby, the control entity which in MBMS is the 'MBMS control entity, MCE', can be a separate controller, or it can be included in a base station.

In another aspect, the invention relates to a base station for a wireless telecommunication network, the base station being adapted for transmitting an operating expense value to a control entity, the operating expense value describing the amount of radio resources per data volume required for providing a broadcast or multicast service from the base station to user equipments, the base station comprising means for providing a service to the user equipments using at least a first and a second operation mode, means for receiving a request signal from the control entity, means for transmitting data of the service to the user equipments, means for transmitting a return information request to the user equipments, means for analyzing user equipment feedback messages and/or means for analyzing user equipment response messages.

The base station further comprises means for determining the operating expense value. Thereby, in case user equipment feedback messages are received in response to transmitting data of the service to user equipments, the determination of the operating expense value is performed by analyzing user equipment feedback messages received in response to transmitting data of the service to user equipments.

In case the data of the service are transmitted and a return information request is transmitted to the user equipments and at least one user equipment response message is received in response to transmitting a return information request to the user equipments, the determination of the operating expense value is performed by analyzing the at least one user equipment response message received in response to transmitting a return information request to the user equipments.

In case no transmission of the service is performed, the determination of the operating expense value is performed by transmitting a return information request to the user equipments and analyzing at least one user equipment response message received in response to transmitting the return information request to the user equipments.

The base station further comprises means for transmitting the determined operating expense value to the control entity.

In another aspect, the invention relates to a computer program product comprising computer executable instructions to perform the method of selecting between at least a first and a second operation mode of providing a broadcast or multicast service to user equipments in a wireless telecommunication network according to the invention.

In another aspect, the invention relates to a computer program product comprising computer executable instructions to perform the method of transmitting an operating expense value to a control entity, the operating expense value describing the amount of radio resources per data volume required for providing a broadcast or multicast service from a base station to user equipments, the providing of the service being performable using at least a first and a second operation mode, the method comprising receiving a request signal from the control entity and determining the operating expense value according to the invention.

### Brief description of the drawings

In the following preferred embodiments of the invention will be described in greater detail by way of example only making reference to the drawings in which:
- Figure 1: shows a block diagram of a wireless communication network,
- Figure 2: shows a flow chart illustrating a method of selecting between operation modes of providing a broadcast or multicast service to user equipments,
- Figure 3: shows a flow chart illustrating a method of transmitting an operating expense value to a control entity,
- Figure 4: shows a further block diagram of a wireless communication network.

### Detailed description

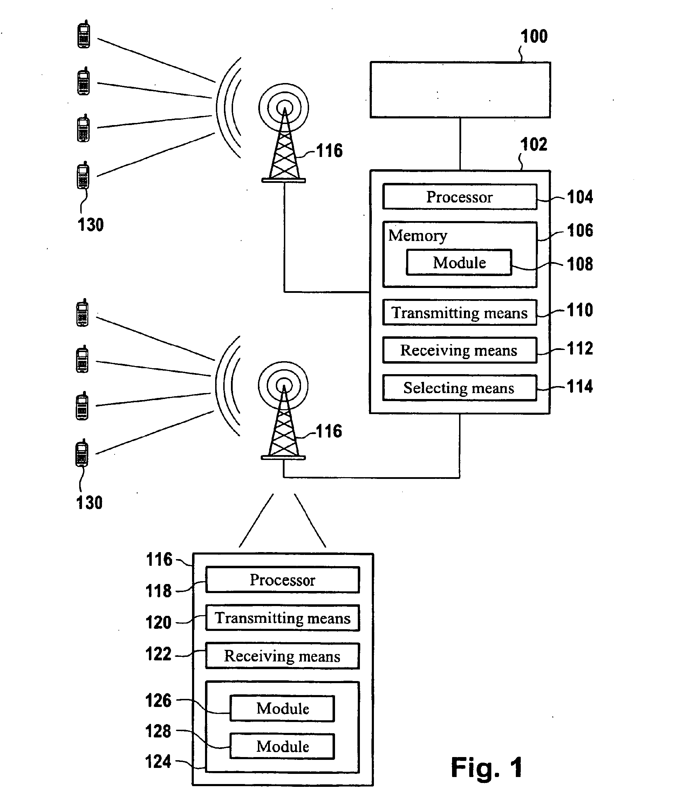

Fig. 1 shows a block diagram of a wireless communication network. The communication network comprises a core network 100, a control entity 102 (MBMS control entity, MCE), a base station 116 (eNodeB) and user equipments (UEs) 130. Thereby, the core network 100 is responsible for switching and routing voice and data connections, while the MCE 102 and the eNodeBs 116 are responsible to handle all radio related functionalities.

The MCE 102 comprises a processor 104 and a memory 106. The memory 106 comprises a module 108 comprising computer executable instructions executable by the processor 104. The MCE 102 further comprises transmitting means 110, receiving means 112 and selecting means 114.

The selecting means 114 allow the MCE to select between a first and a second operation mode of providing a broadcast or multicast service to the UEs 130.

The eNodeB 116 comprises a processor 118 and a memory 124 comprising modules 126 and 128. Thereby, the modules 126 and 128 are computer program products comprising computer executable instructions executable by the processor 118. The eNodeB 116 further comprises transmitting means 120 and receiving means 122.

In a first scenario, regarding a given MBMS service, the wireless telecommunication network is not yet performing a transmission of the service to UEs. Therefore, in order to allow the wireless telecommunication network to decide on the most suitable operation mode to transmit the upcoming MBMS service to the UEs 130, a criterion is required for the MCE 102 to decide on the most suitable and most effective MBMS service operation mode. For example, an operation mode might be a point-to-multipoint single-cell (PTM-SC) transmission mode with full feedback (HARQ and CQI) and AMC applied, but without any coordination with neighboring cells. Such a transmission mode might be suitable in the present example of fig. 1, if for example only one of the eNodeBs 116 serves respective UEs 130 which are interested in the given service, whereas another eNodeB 116 does not possess any UEs 130 being interested in the service. In this example, it is sufficient if the eNodeB 116 serving the interested UEs 130 will transmit the MBMS service to said UEs 130, whereas the other eNodeB 116 comprising no interested UEs 130 will not provide the MBMS service.

However, since the MCE 102 typically decides on which operation mode is the most efficient operation mode in terms of used radio resources of the eNodeBs 116, the MCE 102 requires information about radio resources required to provide the MBMS service from the eNodeBs 116 to the UEs 130. Thereby, the problem arises that in the present example the eNodeBs 116 are not yet transmitting the service to the UEs 130. Thus, the eNodeB 116 communicates to the MCE 102 an estimated radio efficiency which will be presumably required to provide the service to the UEs 130.

However, in order to perform such an estimation the eNodeB 116 requires information about the number of UEs 130 interested in the service. The number of interested UEs can be determined by transmitting a counting or polling request from the eNodeB 116 using the transmitting means 120. In response using the receiving means 122, at least one response message is received in response to transmitting said counting or polling request. The received user equipment polling or counting response is analyzed using the module 128. The eNodeB 116 is now able using the module 126 to determine an estimated amount of radio resources necessary to provide the MBMS service to the interested UEs 130 by using the polling or counting response in combination with a modulation and coding scheme which is assumed to provide the service to the UEs 130.

In case polling is used to find out whether there are any users interested in the service at all and there actually are no users, the eNodeB 116 sends '0' as used resources value to the MCE 102. However, in case polling is used to check whether there are interested users for an MBMS service that is not yet transmitted and there actually are users interested in the service, the eNodeB 116 estimates the number of used resources by assuming the modulation and coding scheme as follows: for example the average channel quality of other services (if a channel quality feedback is available) averaged over all users is taken and the best fitting modulation and coding scheme is determined. With this modulation and coding scheme, the eNodeB 116 calculates the number of resource blocks it would have to employ for a predefined volume of service data. However, if a feedback mechanism is not available for any service or if there are no users in the cell that would provide a respective feedback, for example 16-QAM with code rate 1/2 is assumed to be the modulation and coding scheme.

The estimated amount of radio resources is then sent to the MCE 102 which is received by the MCE 102 using the receiving means 112. The module 108 of the MCE 102 analyzes the responses of all eNodeBs 116 in the telecommunication network and by using the selecting means 114, an appropriate operation mode for providing the MBMS service to the UEs 130 is selected.

In the present example, since only one out of two eNodeBs 116 has UEs 130 interested in said service, the selected operation mode is the point-to-point single-cell (PTM-SC) transmission mode.

Now a second scenario of providing an MBMS service to UEs 130 is assumed, wherein an MBMS service transmission is not yet in progress, but by the eNodeBs 116 respective served UEs 130 are all interested in the given MBMS service. In this case, using the above mentioned mechanisms, the MCE 102 receives respective quantities of radio resources which would be required for each of the eNodeBs 116 to provide the service to the respective UEs 130 served by the eNodeBs 116. Based on this information regarding the amount of estimated usage of radio resources, using the selecting means 114 the MCE 102 preferably now decides to switch the operation mode of providing the MBMS service to the UEs 130 to a point-to-multipoint multi-cell transmission mode (PTM-MC) in the form of an MBSFN where participating cells have synchronized MBMS content and thereby considerably reduced interference.

In a third scenario, a transmission of an MBMS service to the UEs 130 may already be in progress. In the present example, providing of said MBMS service to the UEs 130 may thereby be performed in an operation mode with PTM-SC transmission or in a second operation mode with PTM-MC transmission. In order to enable the MCE 102 to decide if the presently used operation mode is still suitable with respect to the used radio resources of the eNodeBs 116 providing the UEs 130 with the MBMS service, the MCE 102 transmits a request signal using the transmitting means 110 to the eNodeBs 116. The eNodeBs 116 receive that request signal and in response a determination of the radio resources necessary for providing the service to the UEs is performed by the eNodeBs 116.

In case of PTM-SC, since PTM-SC comprises an automated HARQ and channel quality feedback (CQI) mechanism and since the eNodeBs 116 possess the ability of dynamically and autonomously adjusting the MCS etc., the determined presently used radio resources correspond to the real actual radio resources used by the eNodeB 116. Thereby, the quality feedback mechanism is used by the eNodeB to update and adjust the MCS.

In case of PTM-MC, since PTM-MC comprises neither an automated HARQ nor a channel quality feedback mechanism and since in PTM-MC the MCS is scheduled by the MCE 102, the determined radio resources correspond to estimated radio resources which would be used by the eNodeB 116 in case PTM-SC transmission would be performed. Thereby, a polling or counting is performed by the eNodeB 114 in order to determine a number of UEs interested in the given service, wherein said number of UEs is then used for the estimation of the radio resources which would be required when PTM-SC transmission would be used.

The eNodeBs 116 then provide the quantity of used radio resources in 'used resource blocks per data quantity' (data quantity or volume to be standardized) to the MCE 102. Based on the received amount of radio resources spent by each eNodeB 116, the MCE 102 decides on either maintaining the presently used operation mode or switching to a more efficient operation mode. Switching to a more efficient operation mode usually also comprises changing of a modulation and coding scheme to a more appropriate MCS, especially for PTM-MC where the modulation and coding scheme of participating transmitting eNodeBs 116 is controlled by the MCE 102.

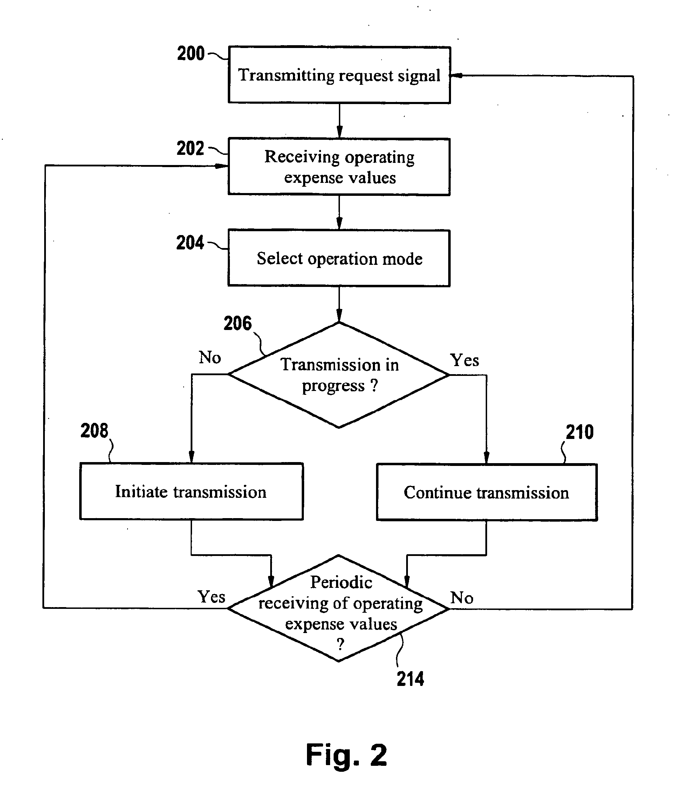

Fig. 2 shows a flow chart illustrating a method of selecting between operation modes of providing a broadcast or multicast service to user equipments. In step 200, an MCE transmits a request signal to a multitude of base stations, the base stations being adapted for providing the broadcast or multicast service to user equipments. In step 202, operating expense values describing the amount of radio resources per data volume required for providing a service from the base stations to the user equipments are received in response to the transmitted request signal from the base stations.

In step 204, based on the received operating expense values, the MCE has to decide on the most suitable operation mode of providing the broadcast or multicast service to the user equipments. For example the most suitable operation mode is in step 204 decided to be PTM-SC or PTM-MC and the MCE determines in step 206 if the transmission of the broadcast or multicast service to the user equipments is already in progress. If step 206 returns that transmission is not yet in progress, in step 208 the transmission is initiated. Thereby, transmission initiation has to be understood as at least providing a respective command indicating the operation mode (PTM-SC/PTM-MC) to be used by the base stations. The transmission initiation command may also comprise a start command which especially in the case of PTM-MC starts a synchronized transmission of the broadcast or multicast service to the user equipments.

If step 206 returns that there is already a transmission in progress, in step 210 this transmission is continued, however with the updated operation mode selected in step 204. Thereby, update of the operation mode may also comprise a change in the modulation and coding scheme, or it may comprise a complete change from for example PTM-SC to PTM-MC.

In case step 204 returns that no transmission of the MBMS service has to be performed because of no interested user equipments, the MCE in step 204 may select the PTM-SC transmission mode since this mode allows the base stations to select by themselves the most efficient transmission in terms of MCS, radio resources, timeslots etc. Of course, in the present example of no interested user equipments, as a result the transmission then selected by the base stations is 'no transmission of the service'.

Either after steps 208 or 210, the MCE in step 214 determines if the system is configured to receive periodically operating expense values from the base stations. If the MCE is configured to receive periodically updated operating expense values, no further request signal has to be transmitted (like in step 200) to the base stations, because the base stations periodically update the used operating expense values and transmit these updated operating expense values to the MCE. Therewith in this case, after step 214 the MCE can continue the procedure by directly repeating the procedure of fig. 2 starting in step 202. However, if operating expense values are not periodically received from the base stations, after step 214 the procedure of fig. 2 is repeated starting with step 200.

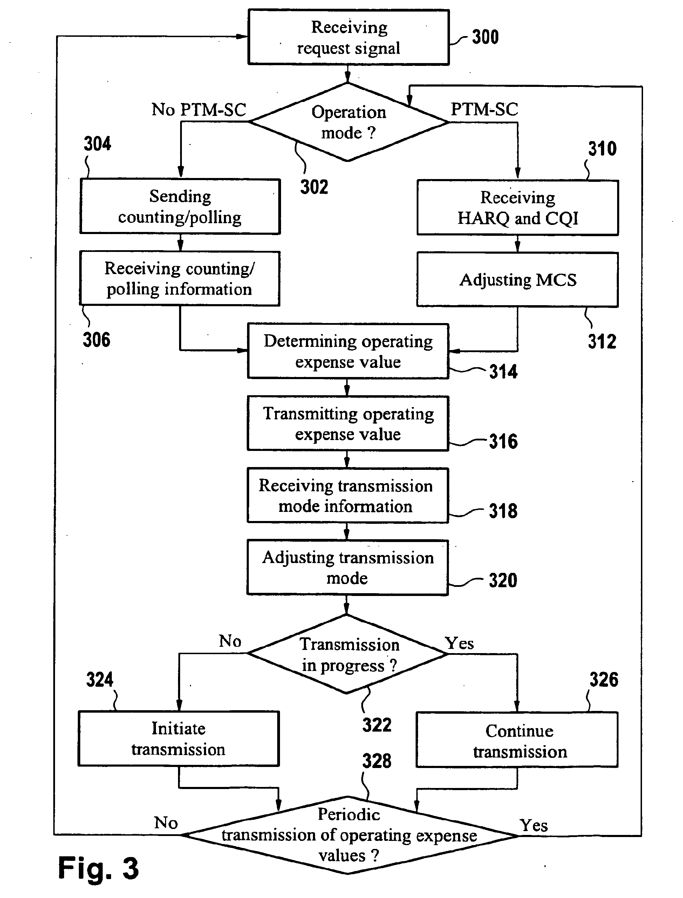

Fig 3 shows a flow chart illustrating a method of transmitting an operating expense value to a control entity. Thereby, the control entity is for example an MCE. In step 300, a base station receives a request signal from an MCE, the request signal instructing the base station to determine an operation expense value describing the amount of radio resources per data volume required for providing a broadcast or multicast service from the base station to use equipments.

In step 302, the base station determines the actually used operation mode. In case step 302 returns that there is actually no PTM-SC transmission occurring which means that no transmission is occurring yet or the operation mode is PTM-MC, in step 304 a counting or polling request is send to the user equipments. In return in step 306 the base station then receives at least one response message. Using this response message, in step 314 an operating expense value in terms of used resource blocks per data quantity for providing the service to the user equipments is determined by the base station. Thereby, such a determination using the response message is a hypothetical estimation of the operation expense value in case PTM-SC transmission would be performed.

As already mentioned above, in case no transmission is performed actually, the determined operation expense value in step 314 is an estimated value based on a standardized MCS.

If step 302 returns that the actual operation mode is PTM-SC, the modulation and coding scheme might be adjusted in step 312 based on HARQ and CQI received before in step 310. Also based on the in step 312 adjusted MCS, in step 314 the actually used amount of resource blocks per data quantity is determined.

Therewith, the main difference between the left branch in fig. 3 including the steps 304-306 and the right branch in fig. 3 including the steps 310 and 312 is, that in the left branch no PTM-SC transmission is performed which means that a scheduling of the transmission in the left branch is performed by the control entity, whereas in the right branch a PTM_SC transmission is performed which means that a scheduling of the transmission in the right branch is performed by the base station itself. As a consequence, in the left branch resource blocks per data quantity are estimated for a hypothetical application of PTM-SC transmission for providing the service, whereas in the right branch the real actually used resource blocks per data quantity are used.

In both cases, the operating expense values are determined by the base station in step 314. The determined operating expense values are then transmitted to the MCE in step 316. In step 318, respective transmission mode information is received from the MCE by the base station and based on that transmission mode information in step 320 the base station adjusts the transmission mode for providing the broadcast or multicast service to the user equipments.

Depending if step 322 returns that the transmission of the broadcast or multicast service to the user equipments is already in progress or not, in step 324 the transmission is initiated or in step 326 the transmission is continued. For both cases in step 324 and step 326, the new adjusted transmission modes from step 320 are used. Finally in step 328 the base station has to decide if it is configured for periodic, on demand or on event triggered transmission of operating expense values. Such a configuration might be received by the MCE which may for example request a periodic transmission of operating expense values.

In case the base station is configured for periodic transmission of operating expense values, no further receiving of request signals from the MCE (like in step 300) are required and after step 328 the procedure of fig. 3 is repeated starting in the step 302. Therewith, the base station periodically sends updated information about determined operating expense values to the MCE. However, if step 328 returns that the base station is not configured for periodic or event triggered transmission of operating expense values, the procedure depicted in fig. 3 is repeated starting from step 300. Therewith, only operating expense values are determined and transmitted to the MCE in return to receiving a request signal in step 300.

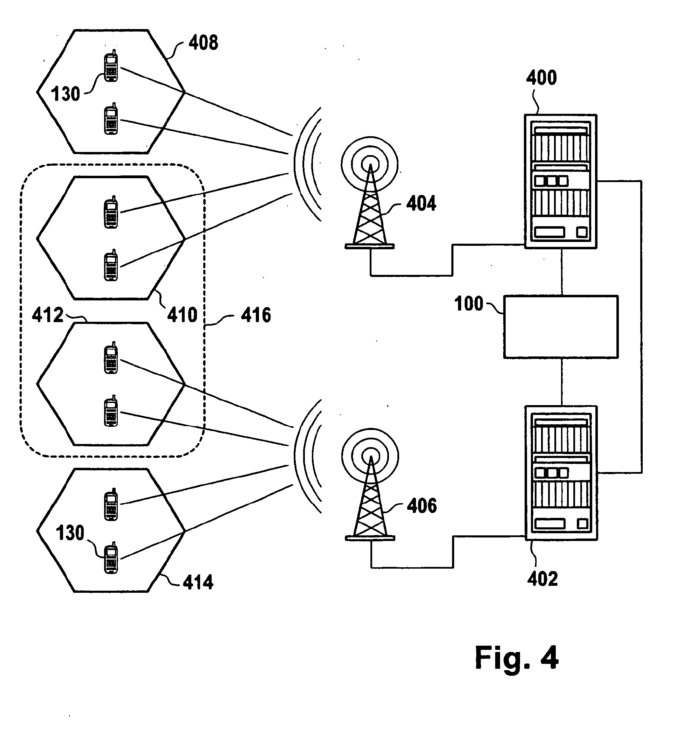

Fig. 4 shows a further block diagram of a wireless communication network. The wireless communication network in fig. 4 comprises two MCEs 400 and 402, a core network 100 and two eNodeBs 404 and 406. Thereby, the eNodeB 404 serves two cells 408 and 410 and the eNodeB 406 serves two cells 412 and 414. Each of the cells 408, 410, 412 and 414 comprises a multitude of user equipments 130.

The eNodeB 404 is assigned to the MCE 400 and the eNodeB 406 is assigned to the MCE 402.

In case the MCEs 400 and 402 are not adapted to communicate with each other, each MCE would control its respectively assigned eNodeBs. In the example of fig. 4 this would mean, that the MCE 400 only controls the eNodeB 404 and that the MCE 402 only controls the eNodeB 406. Therewith, for transmitting the same MBMS service data to user equipments 130 in the cells 410 and 412 it may occur that eNodeB 404 and eNodeB 406 independently of each other provide said same service in PTM-SC transmission mode. The reason for using PTM-SC transmission mode for the eNodeB 404 and the eNodeB 406 might be for example, that in the cells 408 and 414 no user equipments 130 are present which are interested in said MBMS service.

In an embodiment of the invention it is now possible that the MCEs 400 and 402 are adapted to communicate with each other. Such a communication can be performed via the core network 100 or directly in between the MCE 400 and the MCE 402. Alternatively, the eNodeBs 404 and 406 are both adapted to communicate with the MCE 400 and the MCE 402. This enables the MCEs 400 and 402 to decide on which transmission mode to use based on used radio resource efficiency values received from both base stations 404 and 406. If the MCEs 400 and 402 would decide on for example PTM-MC transmission, this either requires identical algorithms for scheduling the data to be transmitted, or this requires that both MCEs need to agree on the scheduling of the data to be transmitted.

In the present example since in cell 410 and 412 user equipments which are interested in the same MBMS service, this leads to the decision of the MCEs 400 and 402 that a transmission of the MBMS service to the cells 410 and 412 in PTM-MC transmission mode is more efficient than an PTM-SC transmission, since the cells 410 and 412 are neighboring cells and therewith in PTM-MC transmission mode interferences between the eNodeBs 404 and 406 can be reduced. Therewith, due to the coordination between the MCEs 400 and 402, as well as the eNodeBs 404 and 406, a new cluster 416 can be built-up comprising the cells 410 and 412.

In order to summarize this idea, instead of the eNodeBs 404 and 406 providing independently of each other the same MBMS service data to the user equipments 130 in PTM-SC transmission mode, a new cluster comprising cells 410 and 412 can be built-up and used for PTM-MC transmission of the MBMS data to the user equipments comprised in the cluster 416.

Depending on the capabilities of the eNodeB 404, the eNodeB may either provide the same MBMS service data in the cells 408 and 410 in the same transmission mode which was decided by the MCEs 400 and 402 for the cell cluster 416. Or the eNodeB 404 may provide the same MBMS service data in the cell 410 in the transmission mode decided by the MCEs 400 and 402 for the cell cluster 416 and independently in a transmission mode separately decided and selected by the MCE 400 for the cell 408.

### List of Reference Numerals

- 100: core network
- 102: control entity
- 104: processor
- 106: memory
- 108: module
- 110: transmitting means
- 112: receiving means
- 114: selecting means
- 116: base station
- 118: processor
- 120: transmitting means
- 122: receiving means
- 124: memory
- 126: module
- 128: module
- 130: user equipment
- 400: control entity
- 402: control entity
- 404: base station
- 406: base station
- 408: cell
- 410: cell
- 412: cell
- 414: cell
- 416: cluster

## Claims

1. A method of selecting by a control entity (102; 400; 402) between at least a first and a second operation mode of providing a broadcast or multicast service to user equipments (130) in a wireless telecommunication network, the method comprising:
- transmitting a request signal from the control entity (102; 400; 402) to a plurality of base stations (116; 404; 406), the base stations (116; 404; 406) being adapted for providing the service to the user equipments (130),
- receiving operating expense values by the control entity (102; 400; 402) in response to the transmitted request signal from the base stations (116; 404; 406), the operating expense values describing the amount of radio resources per data volume required for providing the service from the base stations (116; 404; 406) to the user equipments (130),
- selecting by the control entity (102; 400; 402) one of the at least two operation modes of providing the service by analyzing the received operating expense values.

2. The method of any of the previous claims, wherein the
- first operation mode is **characterized in that** the providing of the service from the base stations (116; 404; 406) to the user equipments (130) is scheduled autonomously by the base stations (116; 404; 406),
- the second operation mode is **characterized in that** the providing of the service from the base stations (116; 404; 406) to the user equipments (130) is scheduled by the control entity (.102; 400; 402).

3. The method of claim 1 or 2, wherein in case providing of the broadcast or multicast service to the user equipments (130) is performed in the second operation mode, the operating expense values are determined by the base stations (116; 404; 406) assuming that the first operation mode is used for providing of the broadcast or multicast service to the user equipments (130).

4. The method of any of the previous claims, wherein the first and/or the second operation mode is **characterized in that**
- user equipment feedback messages are received by a base station in response to transmitting data of the service to the user equipments (130), or alternatively
- data of the service is transmitted to the user equipments (130) and that at least one user equipment response message is received by a base station in response to transmitting a return information request to the user equipments (130).

5. A control entity (102; 400; 402) for a wireless telecommunication network, the control entity (102; 400; 402) being adapted for selecting between at least a first and a second operation mode of providing a broadcast or multicast service to user equipments (130), the control entity (102; 400; 402) comprising:
- means (110) for transmitting a request signal to a multitude of base stations (116; 404; 406), the base stations (116; 404; 406) being adapted for providing the service to the user equipments (130),
- means (112) for receiving operating expense values in response to the transmitted request signal from the base stations (116; 404; 406), the operating expense values describing the amount of radio resources per data volume required for providing the service from the base stations (116; 404; 406) to the user equipments (130),
- means (114) for selecting one of the at least two operation modes of providing the service by analyzing the received operating expense values.

6. A computer program product comprising computer executable instructions to perform any of the method claims 1 to 4

## Patentansprüche

1. Ein Verfahren zum Wählen, durch eine Steuereinheit (102; 400; 402), zwischen mindesten einer ersten und einer zweiten Betriebsart zum Bereitstellen eines Broadcast- oder Multicast-Dlenstes an Benutzergeräte (130) in einem drahtlosen Telekommunikationsnetzwerk, wobei das Verfahren umfasst:
- Übertragen eines Anforderungssignals von der Steuereinheit (102; 400; 402) an eine Vielzahl von Basisstationen (116; 404; 406), wobei die Basisstationen (116; 404; 406) fähig sind, den Dienst an die Benutzergeräte bereitzustellen,
- Empfangen von Betriebskostenwerten durch die Steuereinheit (102; 400; 402) von den Basisstationen (116; 404; 406) in Antwort auf das übertragene Anforderungssignal, wobei die Betriebskostenwerte die Menge der Funkressourcen pro Datenvolumen, welche für das Bereitstellen des Dienstes von den Basisstationen (116; 404; 406) an die Benutzergeräte (130) gefordert werden, beschreiben;
- Wählen, durch die Steuereinheit (102; 400; 402), einer der mindestens zwei Betriebsarten zum Bereitstellen des Dienstes durch Analysieren der empfangenen Betriebskostenwerte.

2. Ein Verfahren nach einem beliebigen der vorhergehenden Ansprüche, wobei
- die erste Betriebsart **dadurch gekennzeichnet ist, dass** das Bereitstellen des Dienstes von der Basisstation (118; 404, 406) an die Benutzergeräte (130) eigenständig von den Basisstationen (116; 404; 406) geplant wird;
- die zweite Betriebsart **dadurch gekennzeichnet ist, dass** das Bereitstellen des Dienstes von der Basisstation (116; 404; 406) an die Benutzergeräte (130) von der Steuereinheit (102; 400; 402) geplant wird.

3. Das Verfahren nach Anspruch 1 oder 2, wobei, wenn das Bereitstellen des Broadcast- oder Multicast-Dienstes an die Benutzergeräte (130) in der zweiten Betriebsart erfolgt, die Betriebskostenwerte von den Basisstationen (116; 404; 406) unter der Annahme ermittelt werden, dass die erste Betriebsart für das Bereitstellen des Broadcast- oder Multicast-Dienstes an die Benutzergeräte (130) benutzt wird.

4. Das Verfahren nach einem beliebigen der vorstehenden Ansprüche, wobei die erste und/oder die zweite Betriebsart **dadurch gekennzeichnet ist, dass**
- Benutzergerät-Feedback-Nachrichten durch eine Basisstation in Antwort auf die Übertragung von Daten des Dienstes an das Benutzergerät (130) empfangen werden, oder alternativ
- Daten des Dienstes an die Benutzergeräte (130) übertragen werden, und dass mindestes eine Benutzergerät-Antwortnachricht durch eine Basisstation in Antwort auf die Übertragung einer Rückmeldeanforderung an das Benutzergerät (130) empfangen wird.

5. Eine Steuereinheit (102; 400; 402) für ein drahtloses Telekommunikationsnetzwerk, wobei die Steuereinheit (102; 400; 402) fähig ist, zwischen mindestens einer ersten und einer zweiten Betriebsart zum Bereitstellen eines Broadcast- oder Multicast-Dienstes an Benutzergeräte (130) zu wählen, wobei die Steuereinheit (102; 400; 402) umfasst:
- Mittel (110) zum Übertragen eines Anforderungssignals an eine Vielzahl von Basisstationen (116; 404; 406), wobei die Basisstationen (116; 404; 406) fähig sind, den Dienst an die Benutzergeräte (130) bereitzustellen,
- Mittel (112) zum Empfangen von Betriebskostenwerten von den Basisstationen (116; 400; 406) in Antwort auf das übertragene Anforderungssignal, wobei die Betriebskostenwerte die Menge der Funkressourcen pro Datenvolumen, welche für das Bereitstellen des Dienstes von den Basisstationen (116; 400; 406) an die Benutzergeräte (130) gefordert werden, beschreiben;
- Mittel (114) zum Auswählen einer der mindestens zwei Betriebsarten zum Bereitstellen des Dienstes durch Analysieren der empfangenen Betriebskostenwerte.

6. Ein Computerprogramm-Produkt, umfassend computerausführbare Befehle zum Durchführen eines beliebigen der Verfahrensansprüche 1 bis 4.

## Revendications

1. Procédé de sélection au moyen d'une entité de commande (102, 400, 402) de l'un d'au moins un premier et un deuxième modes opératoires de fourniture d'un service de diffusion ou de multidiffusion à des équipements utilisateur (130) dans un réseau de télécommunications sans fil, le procédé comprenant :
- la transmission d'un signal de requête en provenance de l'entité de commande (102, 400, 402) à une pluralité de stations de base (116, 404, 406), les stations de base (116, 404. 406) étant adaptées pour fournir le service aux équipements utilisateur (130),
- la réception de valeurs de charge d'exploitation par l'entité de commande (102, 400, 402) en réponse au signal de requête transmis depuis les stations de base (116, 404, 406), les valeurs de charge d'exploitation décrivant la quantité de ressources sans fil requise par volume de données pour fournir le service des stations de base (116, 404. 406) aux équipements utilisateur (130),
- la sélection par l'entité de commande (102, 400, 402) de l'un des au moins deux modes opératoires de fourniture du service par l'analyse des valeurs de charge d'exploitation reçues.

2. Procédé selon la revendication 1, dans lequel :
- le premier mode opératoire est **caractérisé en ce que** la fourniture du service des stations de base (116, 404, 406) aux équipements utilisateur (130) est planifiée de manière autonome par les stations de base (116, 404, 406),
- le deuxième mode opératoire est **caractérisé en ce que** la fourniture du service des stations de base (118, 404, 406) aux équipements utilisateur (130) est planifiée par l'entité de commande (102, 400, 402).

3. Procédé selon la revendication 1 ou 2, dans lequel au cas où la fourniture du service de diffusion ou de multidiffusion aux équipements utilisateur (130) est réalisée selon le deuxième mode opératoire, les valeurs de charge d'exploitation sont déterminées par les stations de base (116, 404, 406) en supposant que le premier mode opératoire est utilisé pour fournir le service de diffusion ou de multidiffusion aux équipements utilisateur (130).

4. Procédé selon l'une quelconque des revendications précédentes, dans lequel le premier et/ou le deuxième mode opératoire est **caractérisé en ce que** :
- des messages de rétroaction d'équipement utilisateur sont reçus par une station de base en réponse à la transmission des données du service aux équipements utilisateur (130), ou en variante
- les données du service sont transmises aux équipements utilisateur (130) et au moins un message de réponse d'équipement utilisateur est reçu par une station de base en réponse à la transmission d'une demande d'information de retour aux équipements utilisateur (130).

5. Entité de commande (102, 400, 402) pour un réseau de télécommunications sans fil, l'entité de commande (102, 400, 402) étant adaptée pour choisir entre au moins un premier et un deuxième modes opératoires de fourniture d'un service de diffusion ou de multidiffusion à des équipements utilisateur (130), l'entité de commande (102, 400, 402) comprenant :
- des moyens (110) de transmission d'un signal de requête à une multitude de stations de base (116, 404, 406), les stations de base (116, 404, 406) étant adaptées pour fournir le service aux équipements utilisateur (130),
- des moyens (112) pour recevoir des valeurs de charge d'exploitation en réponse au signal de requête transmis depuis les stations de base (118, 404, 406), les valeurs de charge d'exploitation décrivant la quantité de ressources sans fil requise par volume de données pour fournir le service des stations de base (116, 404, 406) aux équipements utilisateur (130),
- des moyens (114) pour sélectionner l'un des au moins deux modes opératoires de fourniture du service par l'analyse des valeurs de charge d'exploitation reçues.

6. Produit programme informatique comprenant des Instructions exécutables par ordinateur permettant d'exécuter le procédé selon l'une quelconque des revendications 1 à 4.
